# EUROPEAN PATENT SPECIFICATION

(11) **EP 2 260 213 B1**
(45) Date of publication and mention of the grant of the patent: **13.02.2013**
(21) Application number: 08718689.6
(22) Date of filing: 11.03.2008
(51) Int. Cl.: F16D 13/70, F16D 13/72

(54) **CONDUCTIVE COOLING FOR CLUTCHES**
LEITENDE KÜHLUNG FÜR KUPPLUNGEN
REFROIDISSEMENT CONDUCTEUR POUR EMBRAYAGES

(43) Date of publication of application: 15.12.2010
(73) Proprietor: Ricardo Uk Ltd., Shoreham by Sea West Sussex BN43 5FG (GB)
(72) Inventor: WHEALS, Jonathan, Kenilworth Warwickshire CV8 2SW (GB)
(74) Representative: McWilliams, David John
(86) International application number: PCT/GB2008/000843
(87) International publication number: WO 2009/112788

(56) References cited:
- WO-A-2008/044047
- US-A- 4 368 810
- US-A1- 2002 162 721
- US-B1- 6 491 149

## Description

The present invention relates the conductive cooling of clutches, particularly friction clutches for automotive applications, and other devices and apparatus having heat sensitive components, such as brakes.

The performance of a friction clutch deteriorates with an increase in clutch plate temperature. 'Wet' clutch assemblies are known in which the surface of the clutch components are forcibly bathed in a cooling lubricant. However, the lubricant generates churning losses when the clutch is in a open state and can significantly increase the overall weight of the clutch assembly.

Wet clutches are commonly used in dual clutch transmissions (DCTs). However, there is a need to improve the efficiency and reduce the mass of such transmissions. The application of dry clutches substantially eliminates the drag of the open clutch in DCTs applications, but thermal management of a dry clutch using conventional designs requires improvements that overcome the current limitations of air-cooled designs and improve the life expectancy of facing materials.

Further, the intricate geometry of DCT clutch assemblies requires the use of an iron material with strength exceeding normal grey iron. The use of Compacted Graphite Iron (CGI) is preferred due to its superior strength, but it has poorer heat conduction properties than grey iron. Hence, the application of CGI in DCTs necessitates improved cooling arrangements.

US 64-91149 discloses a multiple-clutch device and US 2002/0162721 discloses an oil cooling arrangement for a stocked plate type clutch assembly.

It is an object of the invention to provide improved cooling arrangements for use in clutch assemblies.

Hereafter several embodiments, e.g. a coding apparatus, a bearing assembly or a brake assembly are described for better understanding the invention, however not all embodiments are according to the invention which is defined by a clutch assembly according to claim 1.

A cooling apparatus for a device including a heat sensitive part, may include a thermally conductive element arranged for rubbing contact with a separate cooled part, and arranged to provide a path for conductive cooling of said heat sensitive part.

The heat sensitive part may comprise a rotary element (e.g. a disc in a clutch or brake), or a heat sensitive part or component of a device arranged for linear motion, for example. The applied pressure from said thermally conductive element is preferably responsive to the temperature of the heat sensitive part (or of air in the vicinity of the heat sensitive part). In one embodiment, the said thermally conductive element is operable to move to an active, rubbing position from a non-rubbing position under predetermined temperature conditions.

The thermally conductive element may consist of a concentric elements in contact with one another but permitting relative movement there between, e.g. rotationally or slidably in an axial direction.

According to an aspect of the invention, there is provided a clutch assembly according to claim 1.

In use, thermal transfer occurs between the driving plate and the cooled part, via said thermally conductive element, thereby reducing the temperature of the driving plate.

The use of a thermally conductive element arranged to transfer heat between a driving plate and a separate cooled component of a clutch or transmission may reduce the need for external cooling of the clutch components using conventional cooling lubricant, therefore enabling the use of 'dry' clutch assemblies in applications where previously only 'wet' clutch assemblies have been feasible, such as in dual clutch transmissions.

The term driving plate will be understood by those in the art to mean a plate or driving member within a clutch against which a friction plate is intended to be clamped in use. However, in other embodiments, the use of a thermally conductive element arranged for contact with a separate cooled part may be applicable to any of the pressed, cast or other driving plate elements of the clutch.

The applied pressure may be zero or a relatively nominal value under normal operating conditions, and increased significantly when the temperature of plate increases.

In one embodiment, the thermally conductive element consists of a concentric elements in contact with one another but arranged for movement relative to one another.

In one embodiment, the said thermally conductive element is operable to move to an active, rubbing position from a non-rubbing position under predetermined temperature conditions. Such embodiments reduce the deleterious effects of drag torque between the conductive element and the cooled part, as well as reducing wear of the rubbing surfaces.

In the most preferred embodiments, the driving plate includes a plurality of said thermally conductive elements, e.g. in an annular array concentric with a cooled portion of a tubular shaft about which the plate is mounted.

The conductive element is preferably both thermally and electrically conductive. Hence, when in active mode the element is able to create an electrically conductive path that can be used to generate a signal as an input to a vehicle ECU, e.g. for use in control of the vehicle powertrain according to the temperature of the clutch.

A driving plate for a clutch assembly, may incorporate a thermally conductive element, wherein the thermally conductive element is arranged for brushing or rubbing against a separate cooled part of a clutch assembly or transmission.

Preferably, said conductive element is operable to move to an active, rubbing position from a non-rubbing position under predetermined temperature conditions.

The driving plate may include or be arranged in conjunction with any of the preferred features of the clutch assembly aspect set forth above, for example an annular array of brush elements which may be thermally operable, e.g. in response to radial or axial actuation.

A bearing assembly for use in a clutch or brake, may include an outer race coupled to a plate for use in said clutch or brake and an inner race coupled to a cooled part of the clutch or brake, wherein a thermally conductive brush is arranged between said inner and outer races to provide a path for the transfer of heat between said plate and said cooled part, via said bearing.

The conductive element is preferably operable in response to a heat reactive element, e.g. to urge the element in to brushing contact between said bearing races at a predetermined temperature.

The bearing assembly may include inner and outer races mounted in respective conductive casings, the casing for the outer race intended for coupling to a heat sensitive component and the casing for the inner race intended for coupling to a separate cooled part, wherein a thermally conductive element is arranged between the two casings for the transfer of heat therebetween.

The applied pressure from said thermally conductive element may be responsive to the temperature of said heat sensitive part or of air in the vicinity of the said heat sensitive part. Preferably, said thermally conductive element is operable to move to an active, rubbing position from a non-rubbing position under predetermined temperature conditions.

The thermally conductive element is preferably operable in response to expansion of a thermally expansive element which is thermally coupled to said outer race.

A clutch or brake may include a plate mounted on a bearing, wherein a thermally conductive brush is arranged between the bearing and a separate cooled part of the clutch or brake, said brush arranged for providing a path for heat transfer between said bearing and said cooled part.

The brush is preferably operable in response to a heat reactive element, in order to urge the brush in to brushing contact between said cooled part and said bearing at a predetermined temperature.

The brake assembly may further comprise one or more of the features of the thermally conductive brush element (or its actuation, whether radial or axial) from the above clutch assembly aspect of the invention.

It will be understood that the invention relates more generally to conductive cooling between opposing races of e.g. a bearing, wherein a thermally conductive brush is arranged for contact with a separate cooled part for providing a path for heat transfer between said bearing and said cooled part.

A brake assembly may have a plate incorporating a thermally conductive element, wherein the thermally conductive element is arranged to brush or rub against a separate cooled part of the brake assembly.

As in the preferred clutch assemblies, the applied pressure from said thermally conductive element in said brake assembly is preferably responsive to the temperature of the plate or of air in the vicinity of the plate. For example, said conductive element may be operable to move to an active, rubbing position from a non-rubbing position under predetermined temperature conditions, to thereby reduce the deleterious effects of drag torque and wear between the rubbing surfaces.

The brake assembly may further comprise one or more of the features of the thermally conductive element (or its actuation, whether radial or axial) from the above clutch assembly aspect of the invention.

Similarly, the cooling apparatus may further comprise one or more of the features of the thermally conductive element (or its actuation, whether radial or axial) from the above clutch assembly aspect of the invention.

There are also provided methods of cooling in accordance with the above aspects of the invention, wherein a thermally conductive brush is used to create a path way (directly or indirectly) between a heat sensitive component and a separate cooled part.

Other aspects and preferred features of the invention will be readily apparent from the claims and the following description of several preferred embodiments, the latter being made by way of example only, with reference to the accompanying drawings, in which:
Figure 1 is a schematic cross-sectional view through part of a dual clutch transmission incorporating a brush-type cooling element located in a cavity within a driven plate of the transmission;
Figure 2 is similar to Figure wherein the cooling element is arranged adjacent an exterior face of the driven plate;
Figure 3 is a schematic perspective view of a thermally conductive brush array suitable for use in the embodiments of Figures 1 and 2;
Figure 4 is a schematic perspective view of one of the brush elements from Figure 3;
Figure 5 a schematic perspective view of a locating ring for the brush elements of Figure 4;
Figure 6 is similar to Figure 3 and includes a heat responsive band applied to the locating ring;
Figure 7 is similar to Figure 3 and shows the possible location of radial actuators for the brush elements;
Figure 8 is a schematic perspective view of an alternative to the heat responsive band of Figure 6, the band incorporating a thermally expansive pellet;
Figure 9 is a further schematic perspective view of the band from Figure 8;
Figure 10 is a schematic front view of the band from Figure 8;
Figure 11 is a schematic perspective view of a further alternative to the heat responsive band of Figure 6, the band incorporating bimetallic elements;
Figure 12 is a schematic perspective view of an axially acting actuator cartridge for a radial array of brush elements including ramp surfaces;
Figure 13 is a schematic cross-sectional view of a bearing incorporating a brush-type cooling element;
Figure 14 is similar to Figure 14 and shows a conductive casing arrangement for a bearing; and
Figure 15 is a schematic cross-sectional view of a further axially acting expansion element for use with concentric conductive brush elements.

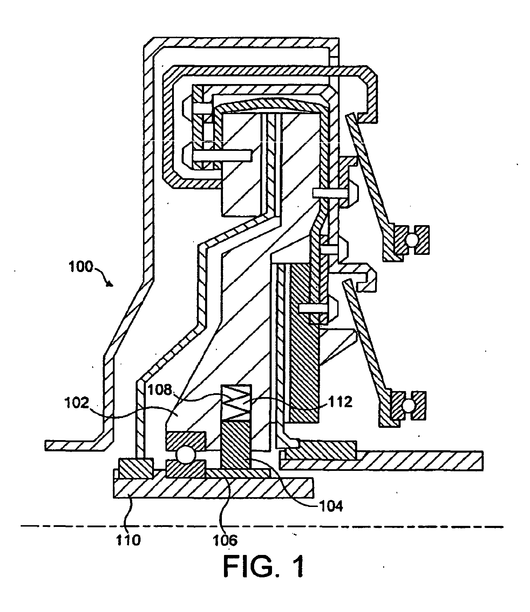

Referring firstly to Figure 1, a clutch assembly 100 includes a driving plate 102 incorporating a thermally conductive element 104, which is arranged to brush or rub against a separate cooled part 106 of the clutch assembly against the action of a spring 108. The thermally conductive element 104 is preferably of copper. In other embodiments, the thermally conductive element is of a conductive material with dry-running properties and may preferably include a sintered bronze impregnated with oil or a carbon-copper composite.

In this case, said cooled part 106 is part of an input shaft 110 of a dual clutch transmission, which is subjected to cooling at a remote location or from fluid within or around the shaft 110. However, the conductive element 104 may be arranged in contact with any other cooled part of the transmission, in the region adjacent the driving plate 102.

Thermal transfer occurs between the cooled part 106 and the driving plate 102, via said thermally conductive element, in order to reduce the temperature of the driving plate 102. Thermally conductive paste, copper wool or other suitable transfer medium may be used between the element 104 and the plate 102 and/or the cooled part 106, in order to improve the transfer of heat from the plate.

The use of a conductive element arranged to transfer heat between a driving plate and a separate cooled component of the clutch may reduce the need for external cooling of the clutch components using conventional cooling lubricant, therefore enabling the use of 'dry' clutch assemblies in applications where previously only 'wet' clutch assemblies have been feasible, such as in dual clutch transmissions.

It is noted that the assembly in Figure 1 forms part a dual clutch transmission, more particularly a dual clutch transmission incorporating a driving plate of cranked configuration for use with opposing pressure plates. This general arrangement is described in detail in GB0720152.8 as filed on 15 October 2007 (GB 2442877A1), However, the concept of heat transfer using a conductive brush described and claimed herein is applicable to other clutch configurations, such as conventional single or multi plate clutches, as well as to brakes and other devices having heat sensitive components.

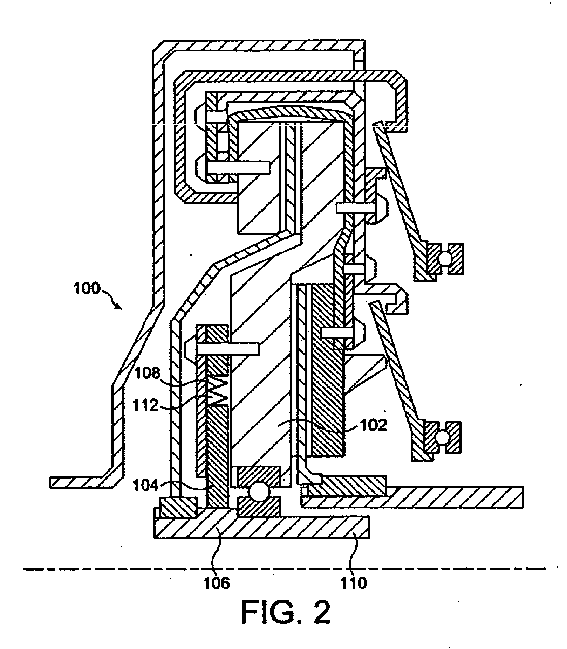

In Figure 1, the conductive brush 104 is mounted in a cavity 112 in the driving plate 102, more particularly at a radially inner portion of the plate 102. The cavity 112 may be machined or cast in the plate 102, for example. An alternative embodiment is shown in Figure 2, in which the brush 104 is arranged at an exterior wall 114 of the plate 104. However, the internally brushed embodiment of Figure 1 provides a more compact assembly.

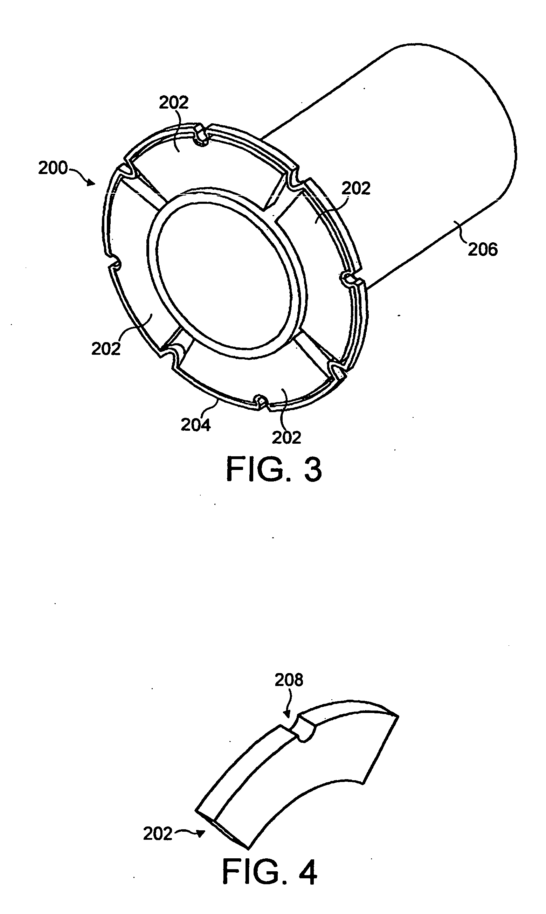

The conductive element 104 may form part of an annular array of brush elements. Figure 3 shows a preferred arrangement 200, in which an annular array of brush elements 202 is mounted within a sprung ring 204, preferably of steel. The ring 204 applies a compressive force to the brush elements 202 in order to apply even pressure to the desired rubbing surface (e.g. a cooled exterior portion of a shaft 206 about which the brush elements 202 are concentrically and circumferentially arranged).

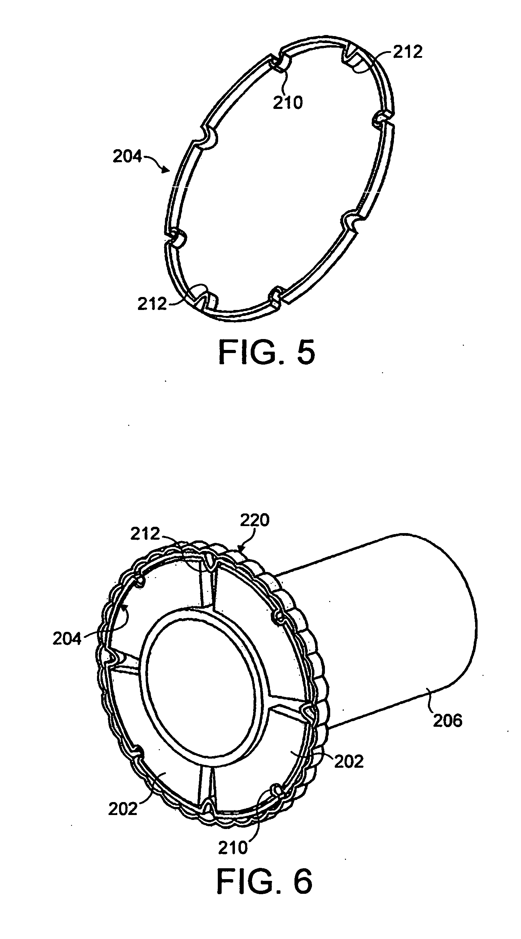

As can be seen most clearly from Figures 4 and 5, each brush element 202 is of arcuate form, preferably of copper, and includes a notch or recess 208 in its upper surface for receiving a securing lug 210 formed on the ring 204, by mean of which the element 202 is held in positive engagement with the ring 204. The securing lugs 210 are arranged circumferentially between spacer lugs 212 also formed on the ring 204. However, other configurations of ring and brushes may be appropriate.

The ring/brush arrangement may be fitted within the cavity of Figures 1 and 2, with or without the biasing spring 108. A suitable thermal transfer medium, e.g. conductive paste or copper wool, may be used between the brush elements 202 and the driving plate and/or the cooled part, in order to improve the transfer of heat.

The rubbing surface of the brushes is preferably complimentary to the surfaces against which it is intended to rub, e.g. planar for a planar cooled surface or curved for a curved cooled surface.

In order to minimise the drag torque generated between the rubbing surfaces, it is preferred if the brush elements referred to above are operable to contact said cooled component only when heat reduction is required, e.g. wherein the applied pressure from the or each brush element is responsive to the temperature of the driving plate. This may also reduce wear of the rubbing surfaces.

In preferred embodiments, the brush elements 104, 202 are operable to move to an active, rubbing position from a non-rubbing position only under predetermined temperature conditions. This may be achieved using thermoexpansive or thermocontractive materials, for example as part of or acting on said brush elements (e.g. a bi-metallic arrangement), or using other thermostatically controllable actuation means.

Figure 6 shows a modified version of the sprung ring embodiment 200 of Figure 3, wherein an outer ring 220 of shape memory alloy (e.g. Notinol, a nickel/titanium alloy) is provided around the ring 204. The outer ring 220 is configured to contract with an increase in driving plate temperature, to thereby initiate or increase the rubbing pressure of the brush elements 202 against the cooled part of the clutch assembly.

As the clutch cools, the compressed inner sprung ring 204 acts on the relaxing outer ring 220 and, since the brush elements are held in positive engagement with the inner ring for movement therewith, the copper brush elements 202 are able to withdraw from their active position radially outwards.

In preferred embodiments, the outer ring is in the form of a corrugated band or a helical wound torroid. To minimise expense, the memory metal may form only a short circumferential length of the band, with the rest of the circumference made up of another material.

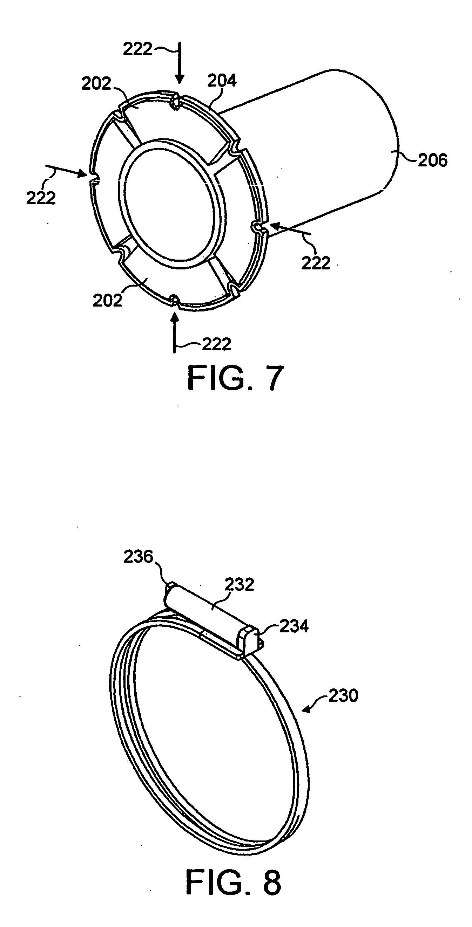

Another embodiment is indicated in Figure 7, wherein radially arranged actuators (not shown, but indicated by arrows 222) are arranged for applying force to the brushes 202 under predetermined temperature conditions. The actuators may take the form of thermally expansive pellets/glands, for example, which are arranged to expand at a predetermined driving plate temperature, to thereby initiate or increase the rubbing pressure of the brush elements 202 against the cooled part of the clutch assembly. These actuators may be positively engaged with their respective brush to provide positive withdrawal of the brush upon cooling of the plate, and may be used with or without the ring 204.

Figures 8 to 10 show an alternative actuation arrangement, in the form of an outer band 230, which is intended to be applied over the outer surface of the inner ring 202.

A pellet 232 of thermally expansive material is provided between ends 234, 236 of the band 224. Under predetermined temperature conditions, the pellet 232 expands and acts to constrict the outer ring 230, so as to constrict the inner ring 202 and thereby initiate or increase the rubbing pressure of the brush elements 202 against the cooled part of the clutch assembly. Preferably, the outer ring, more preferably the pellet, is arranged in good thermal contact with the driving plate. A similar variant is envisaged with contraction of at least one pellet, in order to constrict the outer ring 230 about the inner ring 202.

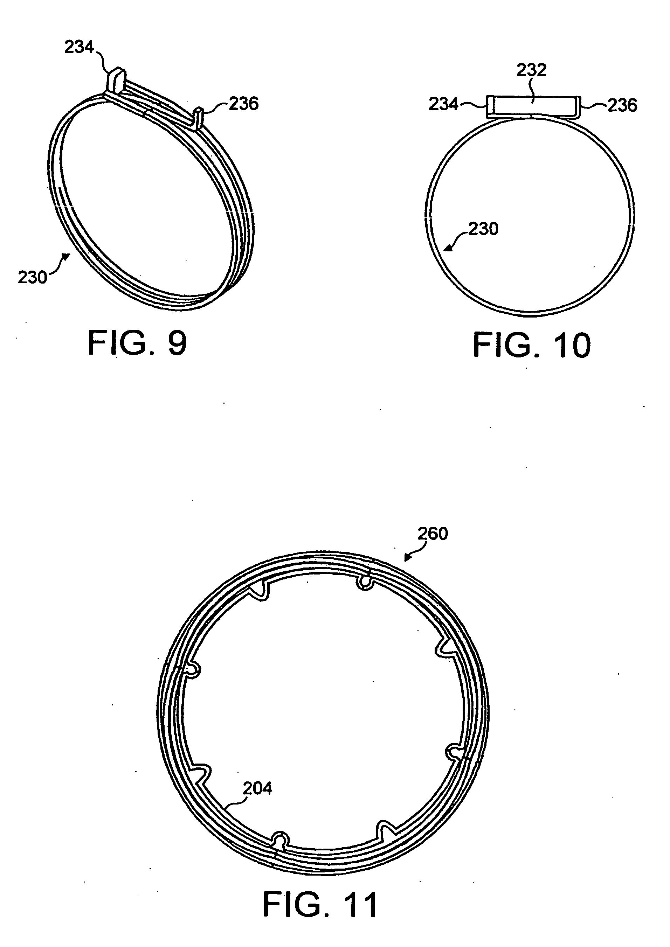

A further embodiment is shown in Figure 11, wherein an outer band 260 of bi-metallic elements (or equivalents) are incorporated to increase the contract pressure for the inner ring 202. In a preferred variant, a snap action feature is provided, in order to provide significant clearance between the rubbing position and non-rubbing position of the conductive elements when disengagement of the conductive elements is required. One preferred method involves dishing of the spring or bi-metallic element orthogonal to the main axis of deflection between two stable states, e.g. in line with conventional bi-metallic applications.

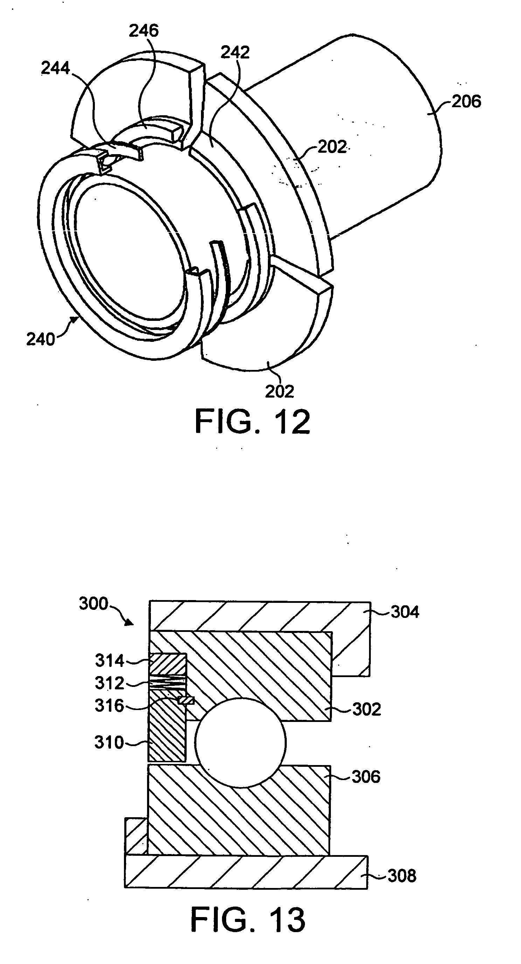

In other embodiments, the brush elements may include a cam or ramp surface, wherein axial movement of a thermally controlled element causes radial displacement of the brush elements, to thereby initiate or increase the rubbing pressure of the brush elements 202 against the cooled part of the clutch assembly. An example is shown in Figure 12, wherein a cartridge 240 contains a thermally expansive material 244 (e.g. a wax) which is arranged to expand in an axial direction so as to drive a portion 246 of the cartridge 240 against a ramp surface 242 on the brush elements 202, under predetermined temperature conditions, whereby to urge the brushes 202 in a radial direction.

The heat transfer concepts described above may be applied to bearings. For example, Figure 13 shows a bearing assembly 300 including an outer race 302 coupled to a plate 304 (only a portion of which is illustrated) for use in a dry clutch or brake, and an inner race 306 coupled to a cooled part 308 of the clutch or brake. In a manner similar to the earlier embodiments, the cooled part 308 is preferably subjected to cooling at a location remote from the bearing assembly 300 or from coolant means immediately adjacent the bearing assembly (e.g. a coolant fluid circulating within or passing through a shaft on which the bearing is mounted).

As illustrated, the outer race 302 incorporates a conductive element 310 which is arranged to rub against a portion of the inner race 306, for thermal transfer between the inner and outer races. Although the conductive element 310 is biased in the direction of the inner race 306 by a spring element 312, it is preferred if contact between the element 310 and the inner race 306 is activated only under the action of a heat reactive element 314 mounted in contact with the outer race 302. Hence, when the temperature of the plate 304 increases, the temperature of the outer race 302 is increased, causing radial of the element 314 at a predetermined temperature, in order to urge the element 310 in to brushing contact with the inner race 306.

A pin 316 is provided to prevent rotation of the brush.

As a modification, the expansion element may be omitted, in which case the brush element 310 is permanently biased into engagement with the inner race using the spring 312, e.g. in a manner similar to the brush element 104 of Figure 1.

In another embodiment (not shown), the conductive element is arranged to brush or rub against the cooled part 308 under the bias of a spring 312 and/or a thermal expansion element 314. The conductive element may cooperate with the inner or outer race for the purpose of communication with said cooled part.

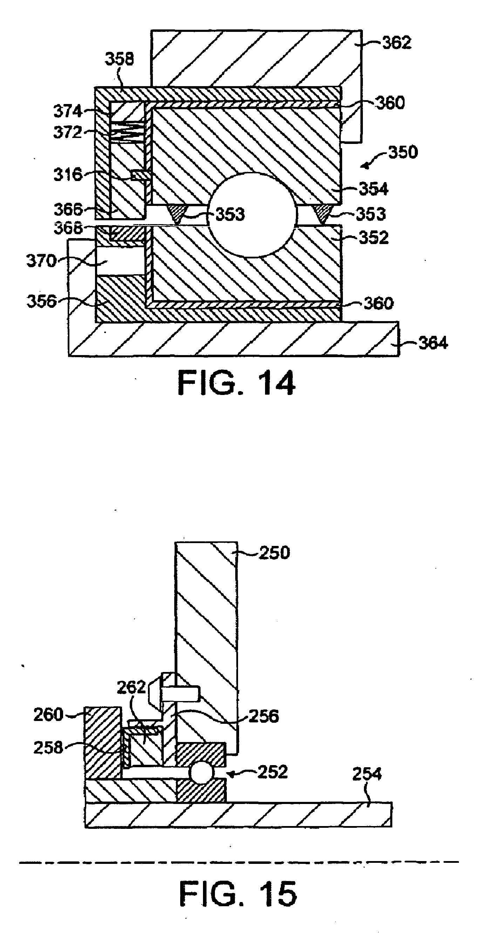

Figure 14 shows a further bearing embodiment, in which a bearing indicated generally at 350 includes inner and outer races 352, 354 (with seals 353 therebetween) mounted within is respective thermally conductive casings 356, 358, preferably of copper. An insulating liner 360 is arranged between the casings 356, 358 and the races 352, 354, in order to protect the bearing from an increase in temperature of the casings 356, 358 in use.

The outer casing 358 is thermally coupled to a plate 362 (only a portion of which is illustrated) mounted for rotation with the outer race 354, whereas the inner casing 356 is thermally coupled with a separate cooled part, in this case a portion of a shaft 364 on which the bearing 350 is mounted.

As illustrated, the outer casing 358 incorporates a conductive element 366 thermally isolated from the outer race 354 by said liner 360. The conductive element 366 is intended for brushing against a portion of the inner casing 356, preferably a wear resistant yet thermally conductive element or ring 368. The inner casing 356 includes reinforcing elements 370 in direct contact with the shaft 364, to support the casing and protect against yield of the casing material in use.

As in Figure 13, the conductive element 366 is biased in the direction of the inner casing 356 by a spring element 372. It is preferred if contact between the element 366 and the inner casing 356 is activated only under the action of a heat reactive element 374 thermally coupled with the outer casing 358. Hence, when the temperature of the plate 362 increases, the temperature of the outer casing 358 is increased, causing radial expansion of the element 374 at a predetermined temperature, in order to urge the element 366 in to brushing contact with the inner casing 356.

The arrangement of Figure 14 is particularly advantageous in that the inner and outer casings can be mounted to a conventional bearing.

In each of the bearing embodiments, brushes may be arranged on opposing sides of the bearing (as opposed to the single sided variant in Figure 13) to increase the cooling capacity and to balance radial loads on the bearing. A conductive compound is preferably used to mount the bearing to the plate and or cooled component. Each embodiment preferably includes an annular array of brushes. It will be understood that the rubbing surface of the brush elements will have an arcuate profile if required for brushing contact with a curved surface.

The bearing embodiments may be used in conjunction with the other cooling embodiments described an illustrated herein, e.g. in a dual clutch transmission.

Figure 15 shows another cooling arrangement in which a plate 250 (only a portion of which is illustrated) is fixed for rotation with the outer race of a bearing 252 mounted on a shaft 254. A first conductive element 256 is connected for rotation with said plate 250 and is arranged in sliding contact with a second conductive element 258, the latter being arranged for contact with a cooled part in the form of a radially extending flange 260 mounted on said shaft 254. The first and second conductive elements 256, 258 are preferably arranged for rotation with one another and are preferably of copper.

The first and second conductive elements 256, 258 cooperate to form a chamber, in which is received a thermally expansive material 262. The material is arranged for axial expansion, in order to press said second conductive 258 against said cooled part 260. The axial expansion of said material 262 may initiate and/or increase the applied pressure from said second element 258 to said cooled part, with an increase in the temperature of the plate or the air in the vicinity of the plate.

The first and second elements 256, 258 are preferably in the form of concentric cylinders arranged in brushing engagement with one another, wherein axial expansion of the material 262 causes relative movement between the two elements 256, 258. Contact is maintained between the two elements during expansion of the material 262. Heat transfer occurs between the cooled part and said plate, via said elements 256, 258.

Although the invention has thus far been described with reference to rotary applications such as clutches and brakes, the inventive concept of conductive cooling using a thermally conductive brush element described herein is applicable to other rotary devices, as well as to the conductive cooling of devices or components arranged for linear motion. Hence, the invention can be considered in terms of a cooling apparatus or cooling arrangement for a device having a heat sensitive part, wherein a thermally conductive brush is arranged for rubbing contact with a separate cooled part, and arranged to provide a path for conductive cooling of the heat sensitive part of the device, be it a rotary element or otherwise.

An advantage is that many of the embodiments referred to herein (e.g. those embodiments arranged to be operable under predetermined temperature conditions) may be arranged autonomously, e.g. so as to be operable without electrically-powered sensors or signal-controlled actuators and associated wired connections. This is of particular importance for installation within the typically nested rotational elements of a vehicle transmission, for example.

In each of the embodiments described herein, it is preferred if the brushes are both thermally and electrically conductive, when active, create an electrically conductive path that can be used to generate a signal as an input to a vehicle ECU, e.g. for use in the control of the vehicle powertrain according to the temperature of the clutch. Wear indicators may be incorporated.

## Claims

1. A clutch assembly (100) including a driving plate (102) incorporating a thermally conductive element (104), wherein the conductive element is arranged for brushing or rubbing against a separate cooled part (106) of the clutch assembly or adjacent the clutch assembly, in order to provide conductive cooling of the driving plate, **characterised in that** the applied pressure from said conductive element is responsive to the temperature of the driving plate or of air in the vicinity of the plate.

2. A clutch assembly according to claim 1 wherein the conductive element is mounted in a cavity (112) in the driving plate or is arranged at an exterior wall (114) of the plate.

3. A clutch assembly according to any of claims 1 to 2 wherein said conductive element is operable to move to an active, rubbing position from a non-rubbing position under predetermined temperature conditions.

4. A clutch assembly according to any preceding claim wherein the driving plate includes an annular array of said conductive elements concentric with said cooled part.

5. A clutch assembly according to claim 4 wherein said annular array is mounted within a sprung ring (204) configured to apply a compressive force to the brush elements (202).

6. A clutch assembly according to claim 5 wherein each conductive brush element has an internal surface for contact with said cooled part, wherein said internal surface is of complimentary shape for the intended contact portion of said cooled part.

7. A clutch assembly according to claim 5 or claim 6 wherein each conductive brush element is secured for movement with said ring.

8. A clutch assembly according to any of claims 5 to 7 wherein an outer band is provided around the sprung ring, wherein the band is configured to constrict with an increase in driving plate temperature, to thereby initiate or increase the rubbing pressure of the conductive brush elements against said cooled part.

9. A clutch assembly according to claim 8 wherein the band is formed of or includes a section of thermally responsive memory alloy which contracts at a predetermined temperature, or includes a pellet of thermally expansive material and opposing ends of the band are arranged in communication with said pellet and are driven in opposite directions as the pellet expands, in order to constrict the band, or cooperates with one or more bi-metallic elements.

## Patentansprüche

1. Kupplungsgruppe (100) mit einer Mitnehmerscheibe (102), die ein wärmeleitfähiges Element (104) beinhaltet, wobei das wärmeleitfähige Element dazu ausgebildet ist, gegen ein separates gekühltes Teil (106) der Kupplungsgruppe oder neben der Kupplungsgruppe zu streifen oder zu schleifen, um eine Kühlung der Mitnehmerscheibe durch Wärmeleitung bereitzustellen, **dadurch gekennzeichnet, dass** der von dem wärmeleitfähigen Element ausgeübte Druck von der Temperatur der Mitnehmerscheibe oder der Temperatur von Luft im Bereich der Scheibe abhängt.

2. Kupplungsgruppe nach Anspruch 1, wobei das wärmeleitfähige Element in einer Ausnehmung (112) in der Mitnehmerscheibe angebracht ist oder an einer Außenwand (114) der Scheibe angeordnet ist.

3. Kupplungsgruppe nach Anspruch 1 oder 2, wobei das wärmeleitfähige Element so betätigbar ist, dass es unter vorgegebenen Temperaturbedingungen von einer nicht schleifenden Position in eine aktive, schleifende Position versetzt wird.

4. Kupplungsgruppe nach einem der vorhergehenden Ansprüche, wobei die Mitnehmerscheibe eine ringförmige Anordnung der leitenden Elemente konzentrisch zum gekühlten Teil aufweist.

5. Kupplungsgruppe nach Anspruch 4, wobei die ringförmige Anordnung in einem Federring (204) angebracht ist, der dazu ausgebildet ist, die Streifelemente (202) mit einer Kompressionskraft zu beaufschlagen.

6. Kupplungsgruppe nach Anspruch 5, wobei jedes wärmeleitfähige Streifelement eine Innenfläche für einen Kontakt mit dem gekühlten Teil aufweist, wobei die Innenfläche eine zum vorgesehenen Kontaktabschnitt des gekühlten Teils komplementäre Form aufweist.

7. Kupplungsgruppe nach Anspruch 5 oder 6, wobei jedes wärmeleitfähige Streifelement für eine Bewegung mit dem Ring gesichert ist.

8. Kupplungsgruppe nach einem der Ansprüche 5 bis 7, wobei ein Außenband um den Federring vorgesehen ist, wobei das Band dazu ausgebildet ist, dass es sich mit einem Anstieg der Mitnehmerscheibentemperatur verengt, um dadurch den Schleifdruck der wärmeleitfähigen Streifelemente gegen den gekühlten Teil auszulösen oder zu erhöhen.

9. Kupplungsgruppe nach Anspruch 8, wobei das Band aus auf Wärme ansprechender Gedächtnislegierung gebildet ist oder einen Abschnitt aus auf Wärme ansprechender Gedächtnislegierung enthält, die sich bei einer vorgegebenen Temperatur zusammenzieht, oder ein Pellet von sich bei Wärme ausdehnendem Material aufweist und gegenüberliegende Enden des Bandes in kommunizierender Verbindung mit dem Pellet angeordnet sind und mit Ausdehnung des Pellets in entgegengesetzte Richtungen getrieben werden, um das Band zusammenzuziehen, oder mit einem oder mehreren Bimetallelementen zusammenwirkt.

## Revendications

1. Assemblage d'embrayage (100) comprenant un plateau entraîneur (102) intégrant un élément conducteur thermiquement (104), dans lequel l'élément conducteur est agencé de façon à affleurer ou à frotter contre une partie refroidie séparée (106) de l'assemblage d'embrayage ou de façon adjacente à l'assemblage d'embrayage, afin de réaliser un refroidissement conducteur du plateau entraîneur, **caractérisé en ce que** la pression appliquée par ledit élément conducteur est réactif à la température du plateau entraîneur ou de l'air à proximité du plateau.

2. Assemblage d'embrayage selon la revendication 1, dans lequel l'élément conducteur est monté dans une cavité (112) dans le plateau entraîneur ou il est agencé sur une paroi extérieure (114) du plateau.

3. Assemblage d'embrayage selon l'une quelconque des revendications 1 ou 2, dans lequel ledit élément conducteur peut être commandé de façon à être déplacé dans une position active de frottement à partir d'une position sans frottement dans des conditions de température prédéterminées.

4. Assemblage d'embrayage selon l'une quelconque des revendications précédentes, dans lequel le plateau entraîneur comprend un agencement annulaire desdits éléments conducteurs concentriques avec ladite partie refroidie.

5. Assemblage d'embrayage selon la revendication 4, dans lequel ledit agencement annulaire est monté à l'intérieur d'une bague à ressort (204) conçue afin d'appliquer une force de compression aux éléments d'affleurement (202).

6. Assemblage d'embrayage selon la revendication 5, dans lequel chaque élément d'affleurement conducteur possède une surface intérieure pour le contact avec ladite partie refroidie, ladite surface intérieure étant d'une forme complémentaire pour la section prévue en vue du contact de ladite partie refroidie.

7. Assemblage d'embrayage selon la revendication 5 ou la revendication 6, dans lequel chaque élément d'affleurement conducteur est sécurisé contre un déplacement au moyen de ladite bague.

8. Assemblage d'embrayage selon l'une quelconque des revendications 5 à 7, dans lequel une bande extérieure est prévue autour de la bague à ressort, la bande étant conçue afin de se resserrer lors d'une augmentation de la température du plateau entraîneur de façon à déclencher ou à intensifier de cette manière la pression de frottement des éléments d'affleurement conducteurs contre ladite partie refroidie.

9. Assemblage d'embrayage selon la revendication 8, dans lequel la bande est réalisée ou comprend une section réalisée dans un alliage à mémoire de forme réactif thermiquement qui se contracte à une température prédéterminée, ou elle comprend une pastille de matériau expansif thermiquement et les extrémités opposées de la bande sont agencées en communication avec ladite pastille et sont entraînées dans des directions opposées lorsque la pastille se dilate, de façon à resserrer la bande, ou elle coopère avec un ou plusieurs éléments bimétalliques.
